# EUROPEAN PATENT SPECIFICATION

(11) **EP 2 980 707 B1**
(45) Date of publication and mention of the grant of the patent: **02.09.2020**
(21) Application number: 14179345.5
(22) Date of filing: 31.07.2014
(51) Int. Cl.: G06F 16/00, G06F 16/27

(54) **Method for creating a database clone of a distributed database, system for creating a database clone of a distributed database, program and computer program product**
Verfahren zum Erstellen eines Datenbankklons aus einer verteilten Datenbank, System zur Erstellung eines Datenbankklons aus einer verteilten Datenbank, Programm und Computerprogrammprodukt
Procédé et système de création d'un clone de base de données d'une base de données distribuée, programme informatique et produit logiciel

(43) Date of publication of application: 03.02.2016
(73) Proprietor: Deutsche Telekom AG, 53113 Bonn (DE)
(72) Inventor: Schatzmayr, Rainer, 53229 Bonn (DE); Agapi, Andrei, 1064CN Amsterdam (NL)
(74) Representative: Schwöbel, Thilo K.

(56) References cited:
- US-A1- 2011 167 221
- US-A1- 2011 246 816
- US-B1- 7 590 660

## Description

### BACKGROUND

The present invention relates to a method for creating a database clone of a distributed database, wherein the distributed database is stored on source nodes of a computer network.

The present invention further relates to a system for creating a database clone of a distributed database.

Additionally, the present invention relates to a program and to a computer program product for creating a database clone of a distributed database.

A distributed database is realized, for example, by a distributed hash table (DHT) for storing data in a distributed and fault tolerant manner. Typically, the distributed hash table (DHT) comprises a key-value application programming interface (API), wherein a key is used to store and retrieve values associated with the key. The distributed hash table (DHT) may replicate the same key-value pair on multiple nodes to increase robustness to failures as compared to non-redundant databases.

Typically, the distributed hash table (DHT) may comprise a subset of interrelated key-value pairs. In this case, write operations are performed to the interrelated key-value pairs in a consistent manner to ensure that database transactions are processed reliably such as to realize correct application semantics. This means, for example, that write operations to the database are performed within a transactional framework to avoid consistency errors and/or to ensure ACID (Atomicity, Consistency, Isolation, Durability) semantics.

The creation of a database clone of a distributed database is complicated by changes being applied to the distributed database during the cloning process. Typically, the data of a distributed hash table (DHT) are stored in distinct physical nodes. Therefore, there is usually no guarantee that snapshot requests and/or write requests (for example related to an update) reach the different database server nodes synchronously. For example, the value for a key may be stored in three source nodes in the source distributed hash table (DHT) and must be copied to other two nodes for the clone distributed hash table (DHT). During the copying procedure, changes to the content of the keys may only be applied "behind" the cloning process (in particular after all of the three source nodes have taken their local snapshots) because write operations into the original distributed hash table (DHT) are typically denied during the cloning process (for example due to service availability). Thus, an arbitrary number of write operations - which have been performed in the original distributed hash table (DHT) - are missing in the cloned distributed hash table (DHT) upon completion of the cloning process.

Moreover, in case that the database comprises a subset of interrelated key-value pairs, the updates on an interrelated key-value pair may only be partially applied to the clone distributed hash table (DHT) - in particular some of the inter-related key updates of the cloned distributed hash table (DHT) are updated, while others are still in their previous state. Therefore, an inconsistent state in the cloned distributed hash table (DHT). Related prior art comprises US 2011/167221 A1 and US2011246816.

US2011167221 discloses a method of backing-up active data volume in data storage system, involves copying unique data slices of associated data slices to backup storage system and storing fingerprint data map in backup storage system.

US2011246816 discloses a method for configuring a system to collect and aggregate datasets. Client devices generate datasets (log data) to be collected and aggregated for storage in the storage device via interacting nodes in various tiers through a network.

### SUMMARY

An object of the present invention is to provide technically simple and cost effective solution for creating a database clone of a distributed database such that data consistency is realized between the database clone and the distributed database, especially upon time of completion of the generation of the database clone.

The object of the present invention is achieved by a method for creating a database clone of a distributed database according to claim 1.

According to the present invention, it is thereby advantageously possible to ensure data consistency between the (original or source) distributed database and the cloned database (database clone) upon completion of the cloning process. Thereby, it is furthermore advantageously possible to realize a cloning process in which the distributed database is in use (which is herein also called "live cloning" of the distributed database). For example, the distributed database is operated during the cloning process such that services can be provided to clients which are served by the database system. This means, preferably, that a running production database is cloned to a new database (in particular with different number of nodes, different configuration and/or different database code/implementation), while processes are still using the database (without service interruption), wherein the database is preferably transparent to user processes. It is thereby furthermore advantageously possible to enable "hot swapping" of an implementation of the database with another (in particular including a bug fix, or a whole different version of the database code). Preferably, the cloned database may be used to analyze a new deployment of the database before using it in production, and compare the outputs of the cloned database with the production database. Thereby, it is advantageously possible to enhance the use of - for example - error analysis, bug tracking, pre-deployment testing, multi-implementation versioning and/or branching off several production deployments from the same initial state.

According to the present invention, the distributed database is stored on source nodes of a computer network in a distributed manner. For example, this means that the first data item of the set of data items is stored on the first node (which is herein also called first source node) and on a second source node, and a second data item of the set of data items is stored on the second source node and on a third source node. This means, in particular, that the set of data items are stored, on the source nodes, in a redundant manner. In particular, the source nodes are configured to form a ring network, wherein each of the source nodes is connected to exactly two other source nodes. For example, the second source node is connected to the first and third source node. Preferably, the collector nodes are coupled to the computer network by connecting the collector nodes to the source nodes. The collector nodes are preferably coupled to the source nodes by inserting the collector nodes into the ring network. For example, the second node (which is herein also called first collector node) is inserted between the third and first source node such that the first collector node is connected to the third source node. Additionally, a further second node (which is herein also called second collector node) is inserted, for example, between the first source node and the second source node.

According to the present invention, it is preferred that the database clone of the distributed database is generated on target nodes by using the data stored on the collector nodes in the cloning process. Preferably, creating, in the cloning process, a copy of the first data item of the first node on the second node includes:
-- transmitting the first data item (in particular a replica of the first data item) from the first node (first source node) to the second node (first collector node), and
-- storing the first data item on the first collector node upon reception of the first data item by the first collector node.

According to the present invention, the computer network performs an update of the distributed database during the cloning process, wherein, in a transaction step, the first data item of the first source node is updated, wherein preferably a database transaction is used to update the first data item of the first source node. This means, in particular, that a writer component of the computer network instructs the first source node to perform an transaction such that the first data item being stored on the first source node is updated.

According to the present invention it is furthermore preferred that the writer component waits for confirmation of the transaction by the first source node (in particular a confirmation in the form of reception of confirmation data from the first source node). At this stage of the cloning process, the copy of the first data item may, for example, only exist on the collector nodes, but not on the target nodes. According to the present invention it is therefore advantageously possible to ensure data consistency between the database clone and the distributed database of the source nodes (upon completion of the cloning process) in that information related to changes being applied to the set of data items stored on the source nodes are also transmitted to the collector nodes. In particular, transaction data related to the transaction step (including preferably information used to update the first data item on the first source node) are transmitted to the first collector node. Upon reception of the transaction data by the first collector nodes, the first collector node confirms the reception of the information related to the change of the first data item to the source nodes, preferably to the first source node, by means of using further confirmation data. The source nodes - here the first source node - preferably confirms the transaction (for example by transmitting an confirmation message informing about successful completion of the transaction) to the writer component upon reception of the further confirmation data from the first collector node. Therefore, it is advantageously possible, according to the present invention, to use the source nodes to coordinate the cloning process, in particular in that the source nodes transmit a confirmation message (in particular comprising the confirmation data related to a change of data items on the source nodes and on the collector nodes) to the writer component only if the collector nodes (involved in the transaction) transmit a further confirmation message (in particular comprising the further confirmation data) to the respective source nodes.

According to the present invention, the cloning process preferably further includes updating the copy of the first data item being stored on the second node. Preferably, the copy of the first data item is stored on the second node and updated upon reception of the transaction data from the first node, wherein the copy of the first data item of the second node is preferably updated by using the transaction data.

According to the present invention, completing the cloning process includes storing a complete copy of the set of data items of the source nodes on the collector nodes. Additionally or alternatively, it is preferred that the cloning process is completed such that a complete copy of the set of data items of the source nodes is stored on the target nodes, wherein - in the alternative case - the collector nodes are in particular used as buffer nodes in the cloning process.

According to a preferred embodiment of the present invention, the method comprises the further step of:
-- creating the database clone using the copy of the set of data items and transaction data stored on the collector nodes.

Thereby, it is advantageously possible according to the present invention that the database clone is created by using in the cloning process, both, the copy of the first data item being stored on the second node and the transaction data being stored on the second node such that data consistency is realized - between the distributed database and the database clone - upon completion of the cloning process.

According to the present invention, creating the database clone (building a clone of a database) preferably includes starting a new database (in particular a separate database clone being created in parallel to the existing database), and then copying the entire data contents of the original database into the new database. Preferably, creating the database clone includes any data updates that are "in flight" (data updates that being performed during the cloning process) such that all data updates (being performed during the cloning process) are included (no data updates are missed between the "original" and the "clone" databases). In addition, any client application using the original database are preferably (for example automatically) configured (migrated) to use the new one (or may remain clients to both, depending on configuration choice).

According to the present invention, the original database is preferably also called source database that the data is branched off from and the new database is preferably also called database clone (or clone database) where the data is being copied to. It is preferred according to the present invention that the source and clone databases have different number of nodes, a different database implementation and/or a different configuration (such as replication factor, write/read quorums, deployment policies). Preferably, at the end of the cloning process, all data in the original database exists in the clone database, replicated with the desired replication factor and deployment policies, specific to the clone database.

According to a further preferred embodiment of the present invention, the complete copy of the set of data items of the source nodes is stored on the collector nodes in a fault tolerant and distributed manner.

Thereby, it is advantageously possible according to the present invention to copy the data from the (source or original) distributed database to the database clone (which is also called clone database) in a fault tolerant and distributed manner such that the cloning time as well as a per-node overhead is minimized, especially in case of a relatively large distributed database.

According to the present invention, it is preferred that the computer network comprises a number of collector nodes (snapshot collectors) that coordinate and load balance snapshot collection and transfer data from the source to the database clone. For example, a collector node is either realized by an existing server node of the source database, or to a separate node or process that temporarily joins the source database to support the cloning task. In particular, it is advantageously possible that each node in the source database is assigned a collector role and no other collector nodes join. In this case, each node will be independently responsible of collecting its own local snapshot and sending it to the new nodes (target nodes) responsible for the data in the database clone (without any intermediate collection stage). Alternatively, in particular, separate snapshot collector nodes (i.e. separate from the source nodes) are deployed to protect the source nodes from the data transfer load). Still alternatively, only a subset of source nodes are assigned the collector role, in particular in case that (some) source nodes are unable to perform the snapshot collector role (e.g. if they cannot directly reach some servers in the clone database to send parts of their snapshots - for instance due to VLAN network configuration or firewalls), or in case that performance of such data transfer would be low due to geographic proximity. Thus, multiple snapshot collectors (specialized and/or designated storage servers) are preferably employed to share the load of transferring the database contents, and/or to ensure fault resilience during the cloning process. Preferably, a single snapshot collector is used to coordinate state transfer for the entire database, for example in case that the database state to be transferred is small enough that no load balancing is needed, and/or in case that the failure of snapshot collectors during the cloning process is not of concern.

According to a further example of the present invention, the method comprises the further steps of:
-- adding target nodes to the computer network,
-- creating the database clone on the target nodes using the copy of the set of data items and transaction data stored on the collector nodes,
-- decoupling the collector nodes from the computer network.

Thereby, it is advantageously possible according to the present invention to create the database clone on the target nodes by using the collector nodes being coupled to the source nodes during the cloning process such that data consistency is realized between the distributed database and the database clone upon completion of the cloning process. Once the content is copied, the two databases (source and clone databases) are preferably isolated from each other, and, in particular, different sets of changes are applied to each of the two databases such that they branch off from each other. However, the requirement on the cloning process is that, until the moment the two databases are decoupled on purpose (i.e. when the sets of writes applied to the two databases start to differ by application/configuration choice), the state in the two databases is preferably exactly the same, including any in-flight updates.

According to a further example of the present invention, the computer network comprises a writer component for transmitting transaction data to the source nodes, wherein the cloning process is coordinated by the source nodes such that data consistency is realized between the set of data items stored on the source nodes and the copy of the set of data items stored on the collector nodes.

Thereby, it is advantageously possible according to the present invention data consistency is realized between the database clone and the distributed database of the source nodes upon completion of the cloning process - preferably by means of transmitting the information related to changes (being applied to the set of data items of the source nodes) to the collector nodes as well, and preferably by means of coordinate the cloning process.

According to a further preferred embodiment of the present invention, in the transaction step, the transaction data are transmitted from the first node to the second node, wherein confirmation data are transmitted from the first node to the writer component only in case that the first node receives further confirmation data from the second node, wherein the further confirmation data are related to a reception of the transaction data by the second node, wherein the confirmation data are preferably related to a successful completion of the transaction step on the first and second node.

Thereby, it is advantageously possible according to the present invention to coordinate the cloning process by the source nodes in that the source nodes transmit a confirmation message (in particular comprising the confirmation data related to a change of data items on the source nodes and on the collector nodes) to the writer component only if the collector nodes (involved in the transaction) transmit a further confirmation message (in particular comprising the further confirmation data) to the respective source nodes. Preferably, it is thereby advantageously possible to create a database clone being in a consistent state with the (source) distributed database, wherein it is guaranteed that any write issued by a client that returns success (to the writer element), is reflected in, both, the source and clone database and is applied to the same pre-existing state in both databases.

According to the present invention, it is preferred that consistency between source and clone databases is ensured by coordinating database servers in the (source) distributed database, clients and collector nodes such that all write operations are included (no writes are lost) during the cloning process. In particular, all the write operations being performed after the snapshot initiation in the source database are only acknowledged to client applications (i.e. considered successful) after they have been successfully written to the collector nodes and/or target nodes (preferably the database clone) as well. Preferably, state merging is coordinated between the snapshot data (copy of the set of data items) and the new in-flight writes (transaction data) on the database clone such that updates are always applied in-order.

According to a further example of the present invention, the writer component is informed, about a successful completion of the transaction step, in case:
-- that the first data item of the first node is updated, and
-- that the transaction data related to the transaction step are stored on the second node and/or that the copy of the first data item being stored on the second node is successfully updated.

Thereby, it is advantageously possible according to the present invention that a specific transaction is performed consistently on the source nodes and collection nodes such that data consistency is realized - in particular at any time - between the data stored on the source and collector nodes.

Furthermore, the present invention relates to a system for creating a database clone of a distributed database according to claim 6.

According to the present invention, it is thereby advantageously possible to provide a system, especially for using the inventive method, wherein data consistency is realized between the (original or source) distributed database and the cloned database (database clone) at the time of completion of the generation of the database clone. Furthermore, it is thereby advantageously possible to provide a system realizing a cloning process in which the distributed database is operable during the cloning process (which is herein also called "live cloning" of the distributed database). For example, the distributed database is operated during the cloning process such that services can be provided to clients which are served by the database system.

It is furthermore preferred according to the present invention, and especially with respect to the inventive system, that the system is configured to create the database clone using the copy of the set of data items and transaction data stored on the collector nodes.

Thereby, it is advantageously possible according to the present invention that a system is provided, wherein, in the cloning process, both, the copy of the first data item being stored on the second node and the transaction data being stored on the second node are used to realize data consistency - between the distributed database and the database clone - at the time of completion of the generation of the database clone.

It is furthermore preferred according to the present invention, and especially with respect to the inventive system, that the system is configured to add target nodes to the computer network, wherein the system is configured to create, upon addition of the target nodes to the computer network, the database clone on the target nodes using the copy of the set of data items and transaction data stored on the collector nodes, wherein the system is preferably configured to decouple the collector nodes from the computer network.

Thereby, it is advantageously possible according to the present invention to realize, in the inventive system, that the database clone on the target nodes is created in dependence of the data being consistently stored on the collector nodes.

It is furthermore preferred according to the present invention, and especially with respect to the inventive system, that the system comprises a writer component for transmitting transaction data to the source nodes, wherein the source nodes are configured to coordinate the cloning process such that data consistency is realized between the set of data items stored on the source nodes and the copy of the data items stored on the collector nodes.

Thereby, it is advantageously possible according to the present invention to realize data consistency, by the inventive system, between the database clone and the distributed database of the source nodes at the time of completion of the creation of the database clone - preferably by means of transmitting the information related to changes (being applied to the set of data items of the source nodes) not only to the source nodes, but also to the collector nodes as well. Thereby, it is advantageously possible according to the present invention that the cloning process is coordinated by the source nodes by means of transmitting a confirmation message (confirmation data) to the writer component only if the collector nodes (involved in the transaction) transmit a further confirmation message (further confirmation data) to the respective source nodes.

It is furthermore preferred according to the present invention, and especially with respect to the inventive system, that the system is configured to inform the writer component about a successful completion of the transaction step, in case:
-- that the first data item of the first node is updated, and
-- that the transaction data related to the transaction step are stored on the second node and/or that the copy of the first data item being stored on the second node is successfully updated.

Thereby, it is advantageously possible according to the present invention that a specific transaction is performed on, both, the source nodes and collection nodes together such that data consistency is realized - in particular at any time - between the data stored on the source and collector nodes.

It is furthermore preferred according to the present invention, and especially with respect to the inventive system, that the distributed database is realized by a distributed hash table (DHT), wherein each data item of the distributed hash table (DHT) comprises or implements a key-value pair, wherein the system is preferably configured to update a data item of the data items, in the transaction step, such that
-- a transaction identifier related to the transaction step is attached to the key of the data item, and
-- the value of the data item is updated.

Thereby, it is advantageously possible according to the present invention that a system for generation a clone of a distributed hash table (DHT) is provided, wherein the distributed hash table is operable during the cloning process. Moreover, it is advantageously possible to realize point-in-time data consistency between the (original or source) distributed hash table (DHT) and the distributed hash table clone (DHT clone) at the time of completion of the DHT clone.

Additionally, the present invention relates to a program comprising a computer readable program code which, when executed on a computer or on a network element of a system or on a plurality of network elements of the system, causes the computer or the network element of the system or the plurality of network elements of the system to perform a method according to the present invention.

Still additionally, the present invention relates to computer program product for using a computer network, the computer program product comprising a computer program stored on a storage medium, the computer program comprising program code which, when executed on a computer or on a network element of a system or on a plurality of network elements of the system, causes the computer or the network element of the system or the plurality of network elements of the system to perform a method according to the present invention.

These and other characteristics, features and advantages of the present invention will become apparent from the following detailed description, taken in conjunction with the accompanying drawings, which illustrate, by way of example, the principles of the invention. The description is given for the sake of example only, the scope of the invention is defined by the attached claims. The reference figures quoted below refer to the attached drawings.

### BRIEF DESCRIPTION OF THE DRAWINGS

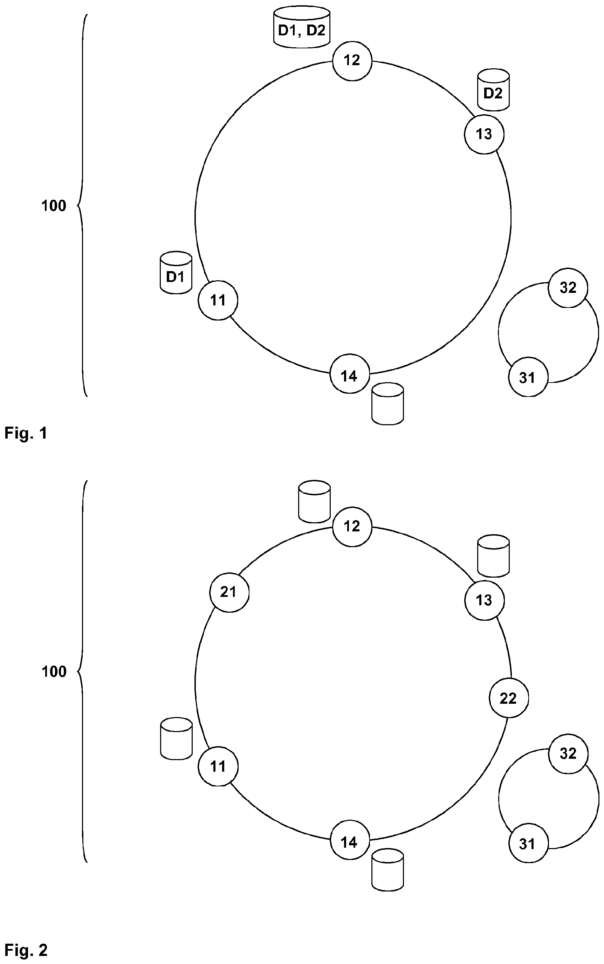

Figures 1 - 8 schematically illustrate a method for creating a database clone of a distributed database according to the present invention, wherein the distributed database is stored on source nodes of a computer network.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figures 1 - 8 a method for creating a database clone of a distributed database according to the present invention is schematically illustrated, wherein the distributed database is stored on source nodes 11, 12, 13, 14 of a computer network 100, preferably a system according to the present invention is used to perform the inventive method.

In Figure 1, a first step of the method is shown, wherein the source nodes 11, 12, 13, 14 include a first node 11 (which is also called first source node), a second source node 12, a third source node 13 and a fourth source node 14, wherein the source nodes 11, 12, 13, 14 preferably form a ring network. The distributed database comprises a set of data items D1, D2 being distributed across the source nodes 11, 12, 13, 14. It is preferred according to the present invention that the distributed database is a distributed hash table (DHT) database, wherein a data item of the DHT is a key-value pair comprising a key and a value associated with the key. In particular, the first source node 11 comprises (in particular stored in storage means associated with the first source node) a first data item D1, the second source node 12 comprises the first data item D1 and a second data item D2 (in particular replicas of the first and second data item D1, D2, respectively), wherein the first and second data items D1, D2 may be interrelated, wherein the first and second data items D1, D2 are updated in the same database transaction. Here, the third source node 13 comprises the second data item D2 (for example a replica of the second data item D2). The distributed database comprises a set of data items - including the first and second data item D1, D2 being copied to a new (target) database of the target nodes 31, 32 upon completion of the cloning process, wherein the target database is initially empty. Preferably, there also exist any number of reader and writer processes currently using the (source) distributed database, wherein the reader and writer processes are configured to read or write data into the source database at any time - in particular during the cloning process.

In Figure 2, a subsequent step of the method is shown, wherein collector nodes 21, 22 are coupled to the computer network 100. In particular, the collector nodes 21, 22 are inserted in the distributed database in preparation for a cloning process, wherein the collector nodes 21, 22 comprise a second node 21 (which is also called first collector node) and a second collector node 22. The collector nodes 21, 22 are preferably configured to have a snapshot collector role. In this example, none of the existing source nodes 11, 12, 13, 14 (in particular storage servers) are assigned a collector role. Preferably, the computer network 100 comprises a mapping function for assigning source nodes (storage servers) to a collector node. Here, the first and fourth source nodes 11, 14 are assigned to the first collector node 21 and the second and third source nodes 12, 13 are assigned to the second collector node 22. Preferably, each node of the participating nodes are informed about which nodes are source nodes 11, 12, 13, 14, collector nodes 21, 22 and target nodes 31, 32. Preferably, the computer network 100 comprises a QUIT-function being configured to abort the cloning process, if the source nodes 11, 12, 13, 14, the collector nodes 21, 22 and/or the target nodes 31, 32 change, or if the source nodes 11, 12, 13, 14 acquire a new member at any point in the cloning process. Subsequently, the source nodes 11, 12, 13, 14 indicate that forwarding any inflight writes into both databases is started.

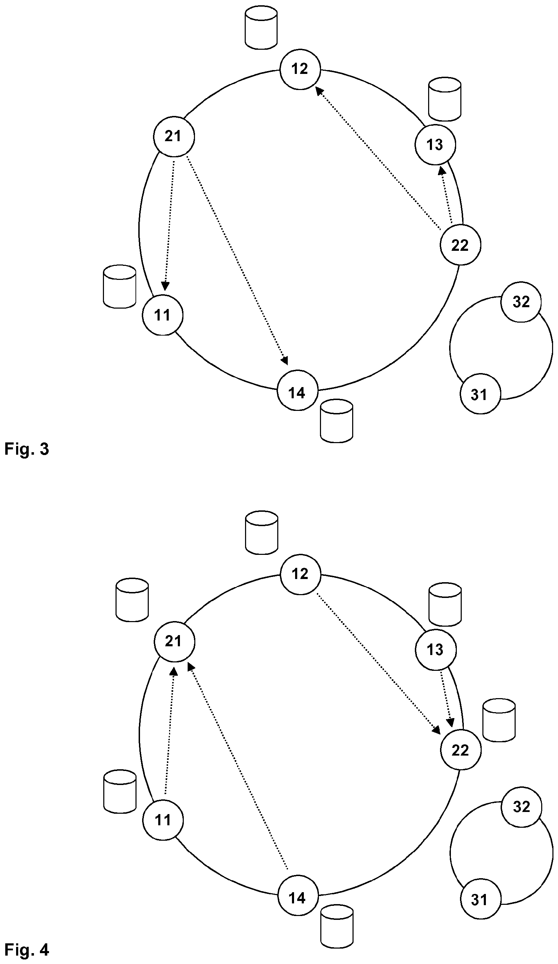

In Figure 3, a subsequent step of the method is shown, wherein the first collector node 21 requests, at the first and fourth source node 11, 14, for starting the generation of a snapshot. Accordingly, the second collector node 22 requests at the second and third source node 12, 13 for starting the generation of a snapshot.

In Figure 4, a subsequent step of the method is shown, wherein the cloning process is started, wherein the cloning process includes creating, on the collector nodes 21, 22, copies of the data items of the assigned source nodes 11, 12, 13, 14, wherein a copy of the first data item D1 is created on the first collector node 21. Preferably, the cloning process is started after the source nodes 11, 12, 13, 14 have been contacted by the collector nodes 21, 22. Here, the first and fourth source nodes 11, 14 send a copy of their local snapshot (copy of the data items stored on the respective nodes) to the first collector node 21. Accordingly, the second and third source nodes 12, 13 send their local snapshots to the second collector node 22. Upon reception of the snapshots by the collector nodes 21, 22, each of the collector nodes 21, 22 aggregate the local snapshots being received from the respective source nodes.

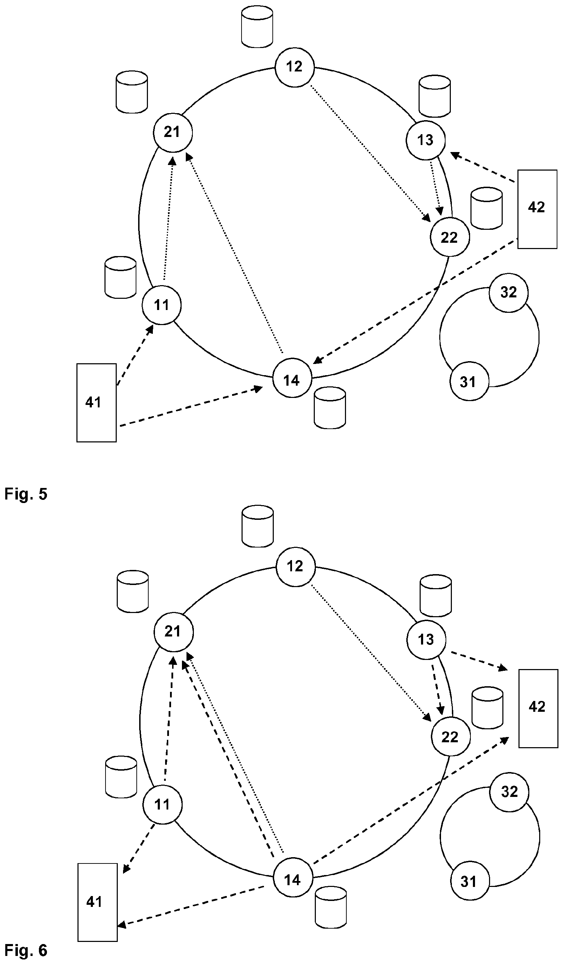

In Figure 5, a subsequent step of the method is shown, wherein - during the copy process in which the snapshots are generated and collected by the collector nodes 21, 22 - transaction step is performed. Preferably, the transaction step includes performing a write operation, by the computer network, wherein a writer component 41, 42 (writer client) contacts the source nodes 11, 12, 13, 14 to issue write operations (in particular to perform updates), wherein the writer component 41, 42 waits for an acknowledgement from the source nodes 11, 12, 13, 14. For example, a first writer component 41 instructs the first and fourth source node 11, 14 to perform an update of the data items stored on the respective first and fourth source node 11, 14 and a second writer component 42 instructs the third and fourth source node 13, 14 to perform an update of the data items stored on the respective third and fourth source node 13, 14. Preferably, transaction data related to the transaction step (in particular data including information required to perform the write operation or update) are transmitted from the first source node 11 to the first collector node 21 (which stored the copy of the first data item D1), wherein the transaction data is stored on the first collector node 21. Preferably, the copy of the first data item D1 of the first collector node 21 is updated using the transaction data.

In Figure 6, a subsequent step of the method is shown, wherein, according to a preferred embodiment of the present invention, in the transaction step, the transaction data are transmitted from the first source node 11 to the first collector node 21 (illustrated by the dashed line from reference numeral 11 to reference numeral 21), wherein confirmation data are transmitted from the first source node 11 to the first writer component 41 (illustrated by the dashed line from reference numeral 11 to reference numeral 41) only in case that the first source node 11 receives further confirmation data from the first collector node 21 (here not shown). The confirmation data are preferably related to a successful completion of the transaction step on the first source node 11 and first collector node 21. The further confirmation data are related to a reception of the transaction data by the first collector node 21. Here the first source node 11, the third source node 13 and the fourth source node 14 forward the write operations (by means of using transaction data) to, both, of servers in the source database responsible for the data items (here servers related to the first, second and third source node 11, 12, 13) and servers in the clone database (here the collector nodes 21, 22). As these writes are saved on the storage servers and acknowledged, the snapshots taken by the collector nodes 21, 22 have not yet made it across to the new DHT (of the target nodes 31, 32). In particular, once these write operations are acknowledged by a quorum in each DHT as per configuration (for example by the first and second source node 11,12 for the source DHT and the first collector node 21 for the clone DHT), the first, third and fourth source node 11, 13, 14 acknowledge the write operations to the first and second writer element 41, 42, which can continue processing.

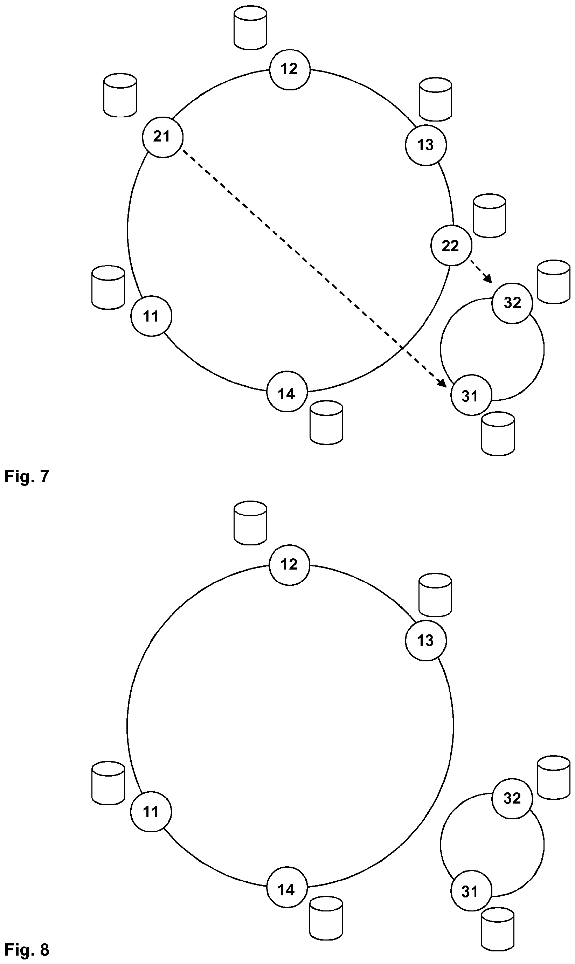

In Figure 7, a subsequent step of the method is shown, wherein after the collector nodes 21, 22 have received all copies of the source nodes 11, 12, 13, 14 and aggregated the content of the received snapshots, the collector nodes 21, 22 calculate which servers are used to deploy each data slice (of the snapshot) of the clone DHT. Thereby, it is advantageously possible to optimize communication and server processing load. The collector nodes 21, 22 then send, to each of the target nodes 31, 32 - the data slices resulting from the calculation. After completion, a "cloning ready" indicator is disseminated to all nodes, including the writer elements 41, 42. For example, a client library decides, based on policy, to stop using the source DHT and only use the clone DHT in case that the current cloning is due to a "hot swap".

In Figure 8, a subsequent step of the method is shown, wherein the collector nodes 21 and 22 are stopped. According to one example - In particular in case of a "hot swap" - the source database is also stopped.

## Claims

1. Method for creating a database clone of a distributed and at least partially replicated database, wherein the distributed database is stored on source nodes (11, 12, 13, 14) of a computer network (100), wherein the distributed database comprises a set of data items (D1, D2) being distributed across the source nodes (11, 12, 13, 14), wherein a first data item (D1) of the set of data items (D1, D2) is stored on a first node (11) of the source nodes (11, 12, 13, 14), wherein the method comprises the steps of:
-- coupling collector nodes (21, 22) to the computer network (100) by connecting the collector nodes (21, 22) to the source nodes (11, 12, 13, 14), wherein the computer network (100) comprises a mapping function for assigning source nodes (11, 12, 13, 14) to collector nodes (21, 22), wherein the collector nodes (21, 22) comprise a second node (21) and the first node (11) is assigned to the second node (21) by the mapping function,
-- starting a cloning process, wherein the cloning process includes:
-- creating, on the second node (21), a copy of the first data item (D1) of the first node (11),
-- updating, in a transaction step, the first data item (D1) of the first node (11),
-- transmitting - to the second node (21) storing the copy of the first data item (D1) - transaction data related to the transaction step, wherein reception of the transaction data is confirmed by the second node (21), wherein the transaction data includes information used to update the first data item (D1) of the first node (11), wherein the transaction data is stored on the second node (21), and updating the copy of the first data item (D1) being stored on the second node (21) by using the transaction data,
-- completing the cloning process such that a complete copy of the set of data items (D1, D2) of the source nodes (11, 12, 13, 14) is stored on the collector nodes (21, 22) by creating the database clone using the copy of the set of data items (D1, D2) and transaction data stored on the collector nodes (21, 22), wherein the distributed and clone databases have the same or a different number of nodes, the same or a different database implementation and/or the same or a different configuration.

2. Method according to one of the preceding claims, wherein the method comprises the further steps of:
-- adding target nodes (31, 32) to the computer network (100),
-- creating the database clone on the target nodes (31, 32) using the copy of the set of data items (D1, D2) and transaction data stored on the collector nodes (21, 22),
-- decoupling the collector nodes (21, 22) from the computer network (100).

3. Method according to one of the preceding claims, wherein the computer network (100) comprises a writer component (41, 42) for transmitting transaction data to the source nodes (11, 12, 13, 14), wherein the writer component (41, 42) waits for confirmation of the transaction by the source nodes (11, 12, 13, 14), wherein the transaction is confirmed by transmitting confirmation data from the first node (11) to the writer component (41, 42).

4. Method according to claim 3, wherein, in the transaction step, the transaction data are transmitted from the first node (11) to the second node (21), wherein confirmation data are transmitted from the first node (11) to the writer component (41, 42) only in case that the first node (11) receives further confirmation data from the second node (21), wherein the further confirmation data are related to a reception of the transaction data by the second node (21), wherein the confirmation data are preferably related to a successful completion of the transaction step on the first and second node (11, 21).

5. Method according to one of claims 3 and 4, wherein the writer component (41, 42) is informed, about a successful completion of the transaction step, in case:
-- that the first data item (D1) of the first node (11) is updated, and
-- that the transaction data related to the transaction step are stored on the second node (21) and/or that the copy of the first data item (D1) being stored on the second node (21) is successfully updated.

6. System for creating a database clone of a distributed and at least partially replicated database, wherein the system comprises a computer network (100) having source nodes (11, 12, 13, 14) and collector nodes (21, 22), wherein the distributed database is stored on the source nodes (11, 12, 13, 14) of the computer network (100), wherein the distributed database comprises a set of data items (D1, D2) being distributed across the source nodes (11, 12, 13, 14), wherein a first data item (D1) of the set of data items (D1, D2) is stored on a first node (11) of the source nodes (11, 12, 13, 14), wherein the system is configured to couple the collector nodes (21, 22) to the computer network (100) by connecting the collector nodes (21, 22) to the source nodes (11, 12, 13, 14), wherein the computer network (100) comprises a mapping function for assigning source nodes (11, 12, 13, 14) to collector nodes (21, 22), wherein the collector nodes (21, 22) comprise a second node (21) and the first node (11) is assigned to the second node (21) by the mapping function, wherein the system is configured to start a cloning process upon connection of the collector nodes (21, 22) to the computer network (100), wherein the cloning process includes:
-- creating, on the second node (21), a copy of the first data item (D1) of the first node (11),
-- updating, in a transaction step, the first data item (D1) of the first node (11),
-- transmitting - to the second node (21) storing the copy of the first data item (D1) - transaction data related to the transaction step, wherein reception of the transaction data is confirmed by the second node (21), wherein the transaction data includes information used to update the first data item (D1) of the first node (11), wherein the transaction data is stored on the second node (21), and updating the copy of the first data item (D1) being stored on the second node (21) by using the transaction data,
wherein the system is configured to complete the cloning process such that a complete copy of the set of data items (D1, D2) of the source nodes (11, 12, 13, 14) is stored on the collector nodes (21, 22), wherein the database clone is created using the copy of the set of data items (D1, D2) and transaction data stored on the collector nodes (21, 22), wherein the distributed and clone databases have the same or a different number of nodes, the same or a different database implementation and/or the same or a different configuration.

7. System according to claim 6, wherein the system is configured to create the database clone using the copy of the set of data items (D1, D2) and transaction data stored on the collector nodes (21, 22).

8. System according to one of claims 6 or 7, wherein the system is configured to add target nodes (31, 32) to the computer network (100), wherein the system is configured to create, upon addition of the target nodes (31, 32) to the computer network (100), the database clone on the target nodes (31, 32) using the copy of the set of data items (D1, D2) and transaction data stored on the collector nodes (21, 22), wherein the system is preferably configured to decouple the collector nodes (21, 22) from the computer network (100).

9. System according to one of claims 6 to 8, wherein the system comprises a writer component (41, 42) for transmitting transaction data to the source nodes (11, 12, 13, 14), wherein the source nodes (11, 12, 13, 14) are configured to coordinate the cloning process such that data consistency is realized between the set of data items (D1, D2) stored on the source nodes (11, 12, 13, 14) and the copy of the data items stored on the collector nodes (21, 22).

10. System according to claim 9, wherein the system is configured to inform the writer component (41, 42) about a successful completion of the transaction step, in case:
-- that the first data item (D1) of the first node (11) is updated, and
-- that the transaction data related to the transaction step are stored on the second node (21) and/or that the copy of the first data item (D1) being stored on the second node (21) is successfully updated.

11. System according to one of claims 6 to 10, wherein the distributed database is realized by a distributed hash table (DHT), wherein each data item (D1, D2) of the distributed hash table (DHT) comprises or implements a key-value pair, wherein the system is preferably configured to update a data item (D1) of the data items (D1, D2, D3), in the transaction step, such that
-- a transaction identifier related to the transaction step is attached to the key of the data item (D1), and
-- the value of the data item (D1) is updated.

12. Program comprising a computer readable program code which, when executed on a computer or on a network element (11) of a system or on a plurality of network elements (11, 12, 13, 14, 15, 21, 22, 31, 32) of the system, causes the computer or the network element (11) of the system or the plurality of network elements (11, 12, 13, 14, 15, 21, 22, 31, 32) of the system to perform a method according to one of claims 1 to 5.

13. Computer program product for using a computer network (100), the computer program product comprising a computer program stored on a storage medium, the computer program comprising program code which, when executed on a computer or on a network element (11) of a system or on a plurality of network elements (11, 12, 13, 14, 15, 21, 22, 31, 32) of the system, causes the computer or the network element (11) of the system or the plurality of network elements (11, 12, 13, 14, 15, 21, 22, 31, 32) of the system to perform a method according to one of claims 1 to 5.

## Patentansprüche

1. Verfahren zum Erstellen eines Datenbankklons einer verteilten und zumindest teilweise replizierten Datenbank, wobei die verteilte Datenbank auf Quellknoten (11, 12, 13, 14) eines Computernetzwerks (100) gespeichert wird, wobei die verteilte Datenbank einen Satz von Datenelementen (D1, D2) umfasst, die über die Quellknoten (11, 12, 13, 14) verteilt sind, wobei ein erstes Datenelement (D1) des Satzes von Datenelementen (D1, D2) auf einem ersten Knoten (11) der Quellknoten (11, 12, 13, 14) gespeichert wird, wobei das Verfahren die Schritte umfasst zum:
- Koppeln von Sammelknoten (21, 22) mit dem Computernetzwerk (100), indem die Sammelknoten (21, 22) mit den Quellknoten (11, 12, 13, 14) verbunden werden, wobei das Computernetzwerk (100) eine Zuordnungsfunktion zum Zuordnen von Quellknoten (11, 12, 13, 14) zu Sammelknoten (21, 22) umfasst, wobei die Sammelknoten (21, 22) einen zweiten Knoten (21) umfassen und der erste Knoten (11) dem zweiten Knoten (21) durch die Zuordnungsfunktion zugeordnet wird,
- Starten eines Klonungsvorgangs, wobei der Klonungsvorgang umfasst:
- Erstellen, auf dem zweiten Knoten (21), einer Kopie des ersten Datenelements (D1) des ersten Knotens (11),
- Aktualisieren, in einem Transaktionsschritt, des ersten Datenelements (D1) des ersten Knotens (11),
- Übertragen - auf den zweiten Knoten (21), auf dem die Kopie des ersten Datenelements (D1) gespeichert wird - von Transaktionsdaten bezüglich des Transaktionsschritts, wobei ein Empfang der Transaktionsdaten durch den zweiten Knoten (21) bestätigt wird, wobei die Transaktionsdaten Informationen umfassen, die verwendet werden, um das erste Datenelement (D1) des ersten Knotens (11) zu aktualisieren, wobei die Transaktionsdaten auf dem zweiten Knoten (21) gespeichert werden, und Aktualisieren der Kopie des ersten Datenelements (D1), die auf dem zweiten Knoten (21) gespeichert ist, indem die Transaktionsdaten verwendet werden,
- Abschließen des Klonungsvorgangs, so dass eine vollständige Kopie des Satzes von Datenelementen (D1, D2) der Quellknoten (11, 12, 13, 14) auf den Sammelknoten (21, 22) gespeichert wird, indem der Datenbankklon unter Verwendung der auf den Sammelknoten (21, 22) gespeicherten Kopie des Satzes von Datenelementen (D1 D2) und Transaktionsdaten erstellt wird, wobei die verteilten und geklonten Datenbanken die gleiche oder eine unterschiedliche Anzahl von Knoten, die gleiche oder eine unterschiedliche Datenbankimplementierung und/oder die gleiche oder eine unterschiedliche Ausgestaltung aufweisen.

2. Verfahren nach einem der vorangehenden Ansprüche, wobei das Verfahren ferner die Schritte umfasst zum:
- Hinzufügen von Zielknoten (31, 32) zu dem Computernetzwerk (100),
- Erstellen des Datenbankklons auf den Zielknoten (31, 32) unter Verwendung der auf den Sammelknoten (21, 22) gespeicherten Kopie des Satzes von Datenelementen (D1, D2) und Transaktionsdaten,
- Entkoppeln der Sammelknoten (21, 22) von dem Computernetzwerk (100).

3. Verfahren nach einem der vorhergehenden Ansprüche, wobei das Computernetzwerk (100) eine Schreiberkomponente (41, 42) zum Übertragen von Transaktionsdaten an die Quellknoten (11, 12, 13, 14) umfasst, wobei die Schreiberkomponente (41, 42) auf eine Bestätigung der Transaktion durch die Quellknoten (11, 12, 13, 14) wartet, wobei die Transaktion bestätigt wird, indem Bestätigungsdaten von dem ersten Knoten (11) an die Schreiberkomponente (41, 42) übertragen werden.

4. Verfahren nach Anspruch 3, wobei die Transaktionsdaten, in dem Transaktionsschritt, von dem ersten Knoten (11) an den zweiten Knoten (21) übertragen werden, wobei die Bestätigungsdaten von dem ersten Knoten (11) an die Schreiberkomponente (41, 42) nur für den Fall übertragen werden, dass der erste Knoten (11) weitere Bestätigungsdaten von dem zweiten Knoten (21) empfängt, wobei sich die weiteren Bestätigungsdaten auf einen Empfang der Transaktionsdaten durch den zweiten Knoten (21) beziehen, wobei sich die Bestätigungsdaten vorzugsweise auf einen erfolgreichen Abschluss des Transaktionsschritts auf dem ersten und zweiten Knoten (11, 21) beziehen.

5. Verfahren nach einem der Ansprüche 3 und 4, wobei die Schreiberkomponente (41, 42) über einen erfolgreichen Abschluss des Transaktionsschritts für den Fall informiert wird, dass:
- das erste Datenelement (D1) des ersten Knotens (11) aktualisiert wird und
- die Transaktionsdaten bezüglich des Transaktionsschritts auf dem zweiten Knoten (21) gespeichert werden und/oder die auf dem zweiten Knoten (21) gespeicherte Kopie des ersten Datenelements (D1) erfolgreich aktualisiert wird.

6. System zum Erstellen eines Datenbankklons einer verteilten und zumindest teilweise replizierten Datenbank, wobei das System ein Computernetzwerk (100) mit Quellknoten (11, 12, 13, 14) und Sammelknoten (21, 22) umfasst, wobei die verteilte Datenbank auf den Quellknoten (11, 12, 13, 14) des Computernetzwerks (100) gespeichert ist, wobei die verteilte Datenbank einen Satz von Datenelementen (D1, D2) umfasst, die über die Quellknoten (11, 12, 13, 14) verteilt sind, wobei ein erstes Datenelement (D1) des Satzes von Datenelementen (D1, D2) auf einem ersten Knoten (11) der Quellknoten (11, 12, 13, 14) gespeichert ist, wobei das System eingerichtet ist, um die Sammelknoten (21, 22) mit dem Computernetzwerk (100) zu koppeln, indem die Sammelknoten (21, 22) mit den Quellknoten (11, 12, 13, 14) verbunden werden, wobei das Computernetzwerk (100) eine Zuordnungsfunktion zum Zuordnen von Quellknoten (11, 12, 13, 14) zu Sammelknoten (21, 22) umfasst, wobei die Sammelknoten (21, 22) einen zweiten Knoten (21) umfassen und der erste Knoten (11) dem zweiten Knoten (21) durch die Zuordnungsfunktion zugeordnet ist, wobei das System eingerichtet ist, um einen Klonungsvorgang bei Verbindung der Sammelknoten (21, 22) mit dem Computernetzwerk (100) zu starten, wobei der Klonungsvorgang umfasst:
- Erstellen, auf dem zweiten Knoten (21), einer Kopie des ersten Datenelements (D1) des ersten Knotens (11),
- Aktualisieren, in einem Transaktionsschritt, des ersten Datenelements (D1) des ersten Knotens (11),
- Übertragen - auf den zweiten Knoten (21), auf dem die Kopie des ersten Datenelements (D1) gespeichert wird - von Transaktionsdaten bezüglich des Transaktionsschritts, wobei ein Empfang der Transaktionsdaten durch den zweiten Knoten (21) bestätigt wird, wobei die Transaktionsdaten Informationen umfassen, die verwendet werden, um das erste Datenelement (D1) des ersten Knotens (11) zu aktualisieren, wobei die Transaktionsdaten auf dem zweiten Knoten (21) gespeichert werden, und Aktualisieren der Kopie des ersten Datenelements (D1), die auf dem zweiten Knoten (21) gespeichert ist, indem die Transaktionsdaten verwendet werden,
wobei das System eingerichtet ist, um den Klonungsvorgang abzuschließen, so dass eine vollständige Kopie des Satzes von Datenelementen (D1, D2) der Quellknoten (11, 12, 13, 14) auf den Sammelknoten (21, 22) gespeichert wird, wobei der Datenbankklon unter Verwendung der auf den Sammelknoten (21, 22) gespeicherten Kopie des Satzes von Datenelementen (D1, D2) und Transaktionsdaten erstellt wird, wobei die verteilten und geklonten Datenbanken die gleiche oder eine unterschiedliche Anzahl von Knoten, die gleiche oder eine unterschiedliche Datenbankimplementierung und/oder die gleiche oder eine unterschiedliche Ausgestaltung aufweisen.

7. System nach Anspruch 6, wobei das System eingerichtet ist, um den Datenbankklon unter Verwendung der auf den Sammelknoten (21, 22) gespeicherten Kopie des Satzes von Datenelementen (D1, D2) und Transaktionsdaten zu erstellen.

8. System nach einem der Ansprüche 6 oder 7, wobei das System eingerichtet ist, um Zielknoten (31, 32) zu dem Computernetzwerk (100) hinzuzufügen, wobei das System eingerichtet ist, um bei Hinzufügung der Zielknoten (31, 32) zu dem Computernetzwerk (100) den Datenbankklon auf den Zielknoten (31, 32) unter Verwendung der auf den Sammelknoten (21, 22) gespeicherten Kopie des Satzes von Datenelementen (D1, D2) und Transaktionsdaten zu erstellen, wobei das System vorzugsweise eingerichtet ist, um die Sammelknoten (21, 22) von dem Computernetzwerk (100) zu entkoppeln.

9. System nach einem der Ansprüche 6 bis 8, wobei das System eine Schreiberkomponente (41, 42) zum Übertragen von Transaktionsdaten an die Quellknoten (11, 12, 13, 14) umfasst, wobei die Quellknoten (11, 12, 13, 14) eingerichtet sind, um den Klonungsvorgang zu koordinieren, so dass eine Datenkonsistenz zwischen dem auf den Quellknoten (11, 12, 13, 14) gespeicherten Satz von Datenelementen (D1, D2) und der auf den Sammelknoten (21, 22) gespeicherten Kopie der Datenelemente realisiert wird.

10. System nach Anspruch 9, wobei das System eingerichtet ist, um die Schreiberkomponente (41, 42) über einen erfolgreichen Abschluss des Transaktionsschritts für den Fall zu informieren, dass:
- das erste Datenelement (D1) des ersten Knotens (11) aktualisiert wird und
- die Transaktionsdaten bezüglich des Transaktionsschritts auf dem zweiten Knoten (21) gespeichert werden und/oder die auf dem zweiten Knoten (21) gespeicherte Kopie des ersten Datenelements (D1) erfolgreich aktualisiert wird.

11. System nach einem der Ansprüche 6 bis 10, wobei die verteilte Datenbank durch eine verteilte Hashtabelle (DHT) realisiert ist, wobei jedes Datenelement (D1, D2) der verteilten Hashtabelle (DHT) ein Schlüssel-Wert-Paar umfasst oder implementiert, wobei das System vorzugsweise eingerichtet ist, um ein Datenelement (D1) der Datenelemente (D1, D2, D3) in dem Transaktionsschritt zu aktualisieren, so dass
- ein Transaktionsidentifikator bezüglich des Transaktionsschritts an den Schlüssel des Datenelements (D1) angehängt wird und
- der Wert des Datenelements (D1) aktualisiert wird.

12. Programm, umfassend einen computerlesbaren Programmcode, der, wenn er auf einem Computer oder auf einem Netzwerkelement (11) eines Systems oder auf mehreren Netzwerkelementen (11, 12, 13, 14, 15, 21, 22, 31, 32) des Systems ausgeführt wird, den Computer oder das Netzwerkelement (11) des Systems oder die mehreren Netzwerkelemente (11, 12 13, 14, 15, 21, 22, 31, 32) des Systems dazu veranlasst, ein Verfahren nach einem der Ansprüche 1 bis 5 durchzuführen.

13. Computerprogrammprodukt zum Verwenden eines Computernetzwerks (100), wobei das Computerprogrammprodukt ein Computerprogramm umfasst, das auf einem Speichermedium gespeichert ist, wobei das Computerprogramm einen Programmcode umfasst, der, wenn er auf einem Computer oder auf einem Netzwerkelement (11) eines Systems oder auf mehreren Netzwerkelementen (11, 12, 13, 14, 15, 21, 22, 31, 32) des Systems ausgeführt wird, den Computer oder das Netzwerkelement (11) des Systems oder die mehreren Netzwerkelemente (11, 12 13, 14, 15, 21, 22, 31, 32) des Systems dazu veranlasst, ein Verfahren nach einem der Ansprüche 1 bis 5 durchzuführen.

## Revendications

1. Procédé pour créer un clone de base de données d'une base de données distribuée et au moins partiellement répliquée, dans lequel la base de données distribuée est stockée sur des nœuds sources (11, 12, 13, 14) d'un réseau d'ordinateurs (100), dans lequel la base de données distribuée comprend un ensemble d'éléments de données (D1, D2) distribués sur les nœuds sources (11, 12, 13, 14), dans lequel un premier élément de données (D1) de l'ensemble d'éléments de données (D1, D2) est stocké sur un premier nœud (11) des nœuds sources (11, 12, 13, 14), dans lequel le procédé comprend les étapes consistant à :
- coupler des nœuds collecteurs (21, 22) au réseau d'ordinateurs (100) en connectant les nœuds collecteurs (21, 22) aux nœuds sources (11, 12, 13, 14), dans lequel le réseau d'ordinateurs (100) comprend une fonction de mappage pour affecter des nœuds sources (11, 12, 13, 14) à des nœuds collecteurs (21, 22), dans lequel les nœuds collecteurs (21, 22) comprennent un deuxième nœud (21) et le premier nœud (11) est affecté au deuxième nœud (21) par la fonction de mappage,
- démarrer un processus de clonage, dans lequel le processus de clonage inclut les étapes consistant à :
- créer, sur le deuxième nœud (21), une copie du premier élément de données (D1) du premier nœud (11),
- mettre à jour, dans une étape de transaction, le premier élément de données (D1) du premier nœud (11),
- transmettre - au deuxième nœud (21) stockant la copie du premier élément de données (D1) - des données de transaction relatives à l'étape de transaction, la réception des données de transaction étant confirmée par le deuxième nœud (21), les données de transaction incluant des informations utilisées pour mettre à jour le premier élément de données (D1) du premier nœud (11), les données de transaction étant stockées sur le deuxième nœud (21), et mettre à jour la copie du premier élément de données (D1) stocké sur le deuxième nœud (21) en utilisant les données de transaction,
- compléter le processus de clonage de telle sorte qu'une copie complète de l'ensemble des éléments de données (D1, D2) des nœuds sources (11, 12, 13, 14) soit stockée sur les nœuds collecteurs (21, 22) en créant le clone de base de données en utilisant la copie de l'ensemble des éléments de données (D1, D2) et les données de transaction stockées sur les nœuds collecteurs (21, 22),
dans lequel les bases de données distribuée et clonée ont le même nombre de nœuds ou un nombre différent de nœuds, la même implémentation de base de données ou une implémentation de base de données différente et/ou la même configuration ou une configuration différente.

2. Procédé selon l'une des revendications précédentes, dans lequel le procédé comprend les étapes supplémentaires consistant à :
- ajouter des nœuds cibles (31, 32) au réseau d'ordinateurs (100),
- créer le clone de base de données sur les nœuds cibles (31, 32) en utilisant la copie de l'ensemble des éléments de données (D1, D2) et les données de transaction stockées sur les nœuds collecteurs (21, 22),
- découpler les nœuds collecteurs (21, 22) du réseau d'ordinateurs (100).

3. Procédé selon l'une des revendications précédentes, dans lequel le réseau d'ordinateurs (100) comprend un composant d'écriture (41, 42) pour transmettre des données de transaction aux nœuds sources (11, 12, 13, 14), dans lequel le composant d'écriture (41, 42) attend la confirmation de la transaction par les nœuds sources (11, 12, 13, 14), dans lequel la transaction est confirmée par la transmission de données de confirmation du premier nœud (11) au composant d'écriture (41, 42).

4. Procédé selon la revendication 3, dans lequel, dans l'étape de transaction, les données de transaction sont transmises du premier nœud (11) au deuxième nœud (21), dans lequel des données de confirmation sont transmises du premier nœud (11) au composant d'écriture (41, 42) uniquement dans le cas où le premier nœud (11) reçoit d'autres données de confirmation du deuxième nœud (21), dans lequel les autres données de confirmation sont relatives à une réception des données de transaction par le deuxième nœud (21), dans lequel les données de confirmation sont de préférence relatives à une exécution réussie de l'étape de transaction sur le premier et le deuxième nœud (11, 21).

5. Procédé selon l'une des revendications 3 et 4, dans lequel le composant d'écriture (41, 42) est informé d'une exécution réussie de l'étape de transaction dans le cas où :
- le premier élément de données (D1) du premier nœud (11) est mis à jour, et -les données de transaction relatives à l'étape de transaction sont stockées sur le deuxième nœud (21) et/ou la copie du premier élément de données (D1) stocké sur le deuxième nœud (21) est mise à jour avec succès.

6. Système pour créer un clone de base de données d'une base de données distribuée et au moins partiellement répliquée, dans lequel le système comprend un réseau d'ordinateurs (100) ayant des nœuds sources (11, 12, 13, 14) et des nœuds collecteurs (21, 22), dans lequel la base de données distribuée est stockée sur les nœuds sources (11, 12, 13, 14) du réseau d'ordinateurs (100), dans lequel la base de données distribuée comprend un ensemble d'éléments de données (D1, D2) distribués sur les nœuds sources (11, 12, 13, 14), dans lequel
un premier élément de données (D1) de l'ensemble d'éléments de données (D1, D2) est stocké sur un premier nœud (11) des nœuds sources (11, 12, 13, 14), dans lequel le système est configuré pour coupler les nœuds collecteurs (21, 22) au réseau d'ordinateurs (100) en connectant les nœuds collecteurs (21, 22) aux nœuds sources (11, 12, 13, 14), dans lequel le réseau d'ordinateurs (100) comprend une fonction de mappage pour affecter des nœuds sources (11, 12, 13, 14) à des nœuds collecteurs (21, 22), dans lequel les nœuds collecteurs (21, 22) comprennent un deuxième nœud (21) et le premier nœud (11) est affecté au deuxième nœud (21) par la fonction de mappage, dans lequel le système est configuré pour démarrer un processus de clonage lors de la connexion des nœuds collecteurs (21, 22) au réseau d'ordinateurs (100), dans lequel le processus de clonage inclut les étapes consistant à :
- créer, sur le deuxième nœud (21), une copie du premier élément de données (D1) du premier nœud (11),
- mettre à jour, dans une étape de transaction, le premier élément de données (D1) du premier nœud (11),
- transmettre - au deuxième nœud (21) stockant la copie du premier élément de données (D1) - des données de transaction relatives à l'étape de transaction, la réception des données de transaction étant confirmée par le deuxième nœud (21), les données de transaction incluant des informations utilisées pour mettre à jour le premier élément de données (D1) du premier nœud (11), les données de transaction étant stockées sur le deuxième nœud (21), et mettre à jour la copie du premier élément de données (D1) stocké sur le deuxième nœud (21) en utilisant les données de transaction,
dans lequel le système est configuré pour compléter le processus de clonage de telle sorte qu'une copie complète de l'ensemble des éléments de données (D1, D2) des nœuds sources (11, 12, 13, 14) soit stockée sur les nœuds collecteurs (21, 22), dans lequel le clone de base de données est créé en utilisant la copie de l'ensemble des éléments de données (D1, D2) et les données de transaction stockées sur les nœuds collecteurs (21, 22), dans lequel les bases de données distribuée et clonée ont le même nombre de nœuds ou un nombre différent de nœuds, la même implémentation de base de données ou une implémentation de base de données différente et/ou la même configuration ou une configuration différente.

7. Système selon la revendication 6, dans lequel le système est configuré pour créer le clone de base de données en utilisant la copie de l'ensemble des éléments de données (D1, D2) et les données de transaction stockées sur les nœuds collecteurs (21, 22).

8. Système selon l'une des revendications 6 ou 7, dans lequel le système est configuré pour ajouter des nœuds cibles (31, 32) au réseau d'ordinateurs (100), dans lequel le système est configuré pour créer, lors de l'ajout des nœuds cibles (31, 32) au réseau d'ordinateurs (100), le clone de base de données sur les nœuds cibles (31, 32) en utilisant la copie de l'ensemble des éléments de données (D1, D2) et les données de transaction stockées sur les nœuds collecteurs (21, 22), dans lequel le système est de préférence configuré pour découpler les nœuds collecteurs (21, 22) du réseau d'ordinateurs (100).

9. Système selon l'une des revendications 6 à 8, dans lequel le système comprend un composant d'écriture (41, 42) pour transmettre des données de transaction aux nœuds sources (11, 12, 13, 14), dans lequel les nœuds sources (11, 12, 13, 14) sont configurés pour coordonner le processus de clonage de telle sorte que la cohérence des données soit réalisée entre l'ensemble des éléments de données (D1, D2) stockés sur les nœuds sources (11, 12, 13, 14) et la copie des éléments de données stockés sur les nœuds collecteurs (21, 22) .

10. Système selon la revendication 9, dans lequel le système est configuré pour informer le composant d'écriture (41, 42) d'une exécution réussie de l'étape de transaction dans le cas où :
- le premier élément de données (D1) du premier nœud (11) est mis à jour, et
- les données de transaction relatives à l'étape de transaction sont stockées sur le deuxième nœud (21) et/ou la copie du premier élément de données (D1) stocké sur le deuxième nœud (21) est mise à jour avec succès.

11. Système selon l'une des revendications 6 à 10, dans lequel la base de données distribuée est réalisée par une table de hachage distribuée (DHT), dans lequel chaque élément de données (D1, D2) de la table de hachage distribuée (DHT) comprend ou met en œuvre une paire clé-valeur, dans lequel le système est de préférence configuré pour mettre à jour un élément de données (D1) des éléments de données (D1, D2, D3) dans l'étape de transaction de telle sorte que
- un identificateur de transaction relatif à l'étape de la transaction soit attaché à la clé de l'élément de données (D1) et
- la valeur de l'élément de données (D1) soit mise à jour.

12. Programme comprenant un code de programme lisible par ordinateur qui, lorsqu'il est exécuté sur un ordinateur ou sur un élément de réseau (11) d'un système ou sur une pluralité d'éléments de réseau (11, 12, 13, 14, 15, 21, 22, 31, 32) du système, amène l'ordinateur ou l'élément de réseau (11) du système ou la pluralité d'éléments de réseau (11, 12, 13, 14, 15, 21, 22, 31, 32) du système à mettre en œuvre un procédé selon l'une des revendications 1 à 5.

13. Produit programme d'ordinateur pour l'utilisation d'un réseau d'ordinateurs (100), le produit programme d'ordinateur comprenant un programme d'ordinateur stocké sur un support de stockage, le programme d'ordinateur comprenant un code de programme qui, lorsqu'il est exécuté sur un ordinateur ou sur un élément de réseau (11) d'un système ou sur une pluralité d'éléments de réseau (11, 12, 13, 14, 15, 21, 22, 31, 32) du système, amène l'ordinateur ou l'élément de réseau (11) du système ou la pluralité d'éléments de réseau (11, 12, 13, 14, 15, 21, 22, 31, 32) du système à mettre en œuvre un procédé selon l'une des revendications 1 à 5.
